**Europäisches Patentamt**

**European Patent Office**

**Office européen des brevets**

(19)

(11) Veröffentlichungsnummer: **0 256 062**
**B1**

(12) **EUROPÄISCHE PATENTSCHRIFT**

(45) Veröffentlichungstag der Patentschrift:
10.01.90

(51) Int. Cl.⁴: **B 29 C 49/18**, B 29 C 49/48

(21) Anmeldenummer: 87901015.5

(22) Anmeldetag: 30.01.87

(86) Internationale Anmeldenummer:
PCT/DE 87/00033

(87) Internationale Veröffentlichungsnummer:
WO 87/04661 (13.08.87 Gazette 87/18)

(54) VERFAHREN UND EXTRUSIONSBLASMASCHINE ZUR HERSTELLUNG VON FLACHFLASCHEN.

(30) Priorität: 31.01.86 DE 3602990

(43) Veröffentlichungstag der Anmeldung:
24.02.88 Patentblatt 88/8

(45) Bekanntmachung des Hinweises auf die Patenterteilung:
10.01.90 Patentblatt 90/2

(84) Benannte Vertragsstaaten:
AT BE CH DE FR GB IT LI NL SE

(56) Entgegenhaltungen:
DE-A- 2 446 178
FR-A- 1 382 252
FR-A- 2 025 368
FR-A- 2 256 819
FR-A- 2 389 480
US-A- 3 012 286
US-A- 3 989 784

(73) Patentinhaber: FISCHER, Rainer, Poststrasse 39,
D-3530 Warburg 2 (DE)

(72) Erfinder: FISCHER, Rainer, Poststrasse 39,
D-3530 Warburg 2 (DE)

(74) Vertreter: Prietsch, Reiner, Dipl.-Ing. et al,
Patentanwälte Dipl.-Ing. Dipl. oec. publ. D. Lewinsky,
Dipl.-Ing. Reiner Prietsch Gotthardstrasse 81,
D-8000 München 21 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Flachflaschen nach dem Oberbegriff des Patentanspruchs 1 sowie eine Extrusionsblasmaschine zur Durchführung des Verfahrens nach dem Oberbegriff des Patentanspruchs 5.

Zur Herstellung von Kunststoffhohlkörpern mit über ihre ganze Länge bzw. ihre ganze Höhe rotationssymmetrischem Querschnitt, z. B. Rundflaschen, wird üblicherweise von einem extrudierten Schlauch ausgegangen, dessen Durchmesser beispielsweise gleich dem Durchmesser des Halses des herzustellenden Hohlkörpers und dessen Wandstärke grösser als die Wandstärke des fertigen Hohlkörpers ist. Der Schlauch wird dann in einer Blasform zu dem fertigen Hohlkörper ausgeblasen, ohne dass es hierbei zu einer ungleichmässigen Wanddickenverteilung kommt.

Für Hohlkörper mit vom Kreisquerschnitt abweichenden Querschnitt, also z. B. für Flachflaschen, ist diese Art der Herstellung aus den in der US-PS 3 892 829 zutreffend im einzelnen angegebenen Gründen nicht durchführbar. Bei der genannten US-PS ist daher eine eigene Zwischenformstation vorgesehen, in der ein Zwischenformling hergestellt wird, dessen Länge erheblich geringer als die Höhe der Flachflasche ist und dessen Oberfläche 25% kleiner als die Oberfläche der herzustellenden Flachflasche ist. Nur dann lässt sich nämlich beim Umformen des Zwischenformlings zu der fertigen Flachflasche in einer Endblasform vermeiden, dass Teile des Zwischenformlings beim Schliessen der beiden Formhälften der Endblasform zwischen diese eingequetscht werden und sogenannte Eselsohren entstehen. Die in der Endblasform daher noch erforderliche, biaxiale Verstreckung des Kunststoffmaterials führt jedoch zu einer ungleichmässigen Wandstärkenverteilung über den Umfang der Flachflasche, denn die Verstreckung findet ausschliesslich in den Oberflächenbereichen statt, die noch nicht an der gekühlten Innenwandung der Endblasform anliegen, also vorzugsweise im Bereich der Schmalseiten und des Bodens der Flachflasche. Um dort noch eine hinreichende Wandstärke zu erhalten, muss zwangsläufig mit einem Materialüberschuss gearbeitet werden. Die fertige Flachflasche hat dementsprechend im Bereich ihrer beiden Breitseiten eine unnötig grosse Wandstärke. Neben dem somit überflüssig grossen Materialverbrauch bedingt diese grosse Wandstärke auch eine verlängerte Taktzeit, da die Kühlzeit sich naturgemäss nach dem Bereich mit der grössten Materialstärke richtet. Dieser Umstand fällt besonders dann ins Gewicht, wenn der Zwischenformling nicht aus einem um einen Hohldorn gespritzten Vorformling sondern aus einem freiextrudierten Schlauch erzeugt wird, da das durch Quetschen verschlossene Schlauchende in den Boden des Zwischenformlings bzw. der Flachflasche zu liegen kommt und dort eine besonders starke Materialanhäufung verursacht. Das Verfahren hat sich in der Praxis nicht durchsetzen können.

Allgemein üblich zur Herstellung von Flachflaschen ohne oder mit Griff ist vielmehr ein Schlauchblasverfahren, bei dem von einem extrudierten Schlauch ausgegangen wird, dessen Umfang nahezu gleich dem grössten Umfang der herzustellenden Flachflasche ist. Der Schlauch wird freihängend mit der für den Hohlkörper gewünschten Wandstärke kontinuierlich extrudiert und nach Erreichen einer der Höhe der Flachflasche entsprechenden Länge von einer Blasform übernommen, in welcher der schlauchförmige Vorformling nun mittels einer Blaspinole zu der fertigen Flachflasche ausgeblasen wird. Die Blaspinole kalibriert gleichzeitig Hals und Mündung der Flasche, während die Blasform bereits beim Schliessen den beträchtlichen überschüssigen Materialanteil insbesondere im Hals- und Schulterbereich abgequetscht hat.

Da der abgequetschte Materialanteil je nach Form der Flachflasche von 10% bis zu 25% und mehr des Gewichtes der fertigen Flasche erreichen kann, ist diese Art der Herstellung verhältnismässig unwirtschaftlich, denn der apparative Aufwand, vor allem aber der Leistungsbedarf für Antrieb, Heizung und Kühlung der Extrusionsblasmaschine ist deutlich höher als für die Herstellung der eigentlichen Flachflasche notwendig, weil selbstverständlich auch der abgequetschte Materialanteil zunächst verflüssigt und dann mitgekühlt werden muss und eine eigene Stanzvorrichtung zu seiner Entfernung von der Flachflasche sowie Transport- und Regeneriervorrichtungen zur Wiederaufarbeitung des Abfallmaterials notwendig sind.

Aus der DE-PS 27 20 448 ist eine Vorrichtung zur Herstellung von Flachflaschen bekannt, die im wesentlichen aus einer zwei Formhälften umfassenden Blasform besteht, wobei jede Formhälfte aus zwei senkrecht zur Formtrennebene verfahrbaren Formteilen besteht, von denen das eine den Hals, die Schmalseiten und den Boden der Flachflasche, das zweite die Breitseiten der Flachflasche ausformt. Ausgegangen wird hierzu von einem schlauchextrudierten oder gespritzten Vorformling, dessen Durchmesser nur etwa gleich dem Halsdurchmesser der Flachflasche ist. Der Vorformling wird während des Schliessens der Form zur Flachflasche ausgeblasen, wobei der Schliessvorgang so abläuft, dass zunächst die jeweiligen ersten oder äusseren Formteile beider Formhälften schliessen. Dieses materialsparende Verfahren setzt allerdings einen sehr exakt gesteuerten Blasvorgang voraus. Es beseitigt auch nicht das Problem der unterwünschten Materialanhäufung im Boden der Flachflasche, wenn von einem extrudierten Vorformling ausgegangen wird. Das Verfahren ergibt eine weitgehend gleichförmige Wandstärke, dies jedoch nur bei Flachflaschen mit nicht allzu kleinen Krümmungsradien, denn bei diesen wird das Material in den entsprechenden Rand- und Eckbereichen bei bereits vollständig geschlossener Form noch verstreckt. Nun weist aber ein nicht unerheblicher Teil der auf dem Markt befindlichen und dementsprechend von den Abfüllern geforderten Flachflaschen relativ scharfe Kanten und dementsprechend kleine Krümmungsradien auf. Wegen ihrer Kosten muss eine Blasformmaschine grundsätzlich, d. h. nach Bestückung mit den jeweiligen Blasformen, in der Lage sein, sämtliche üblichen Flachflaschen zu erzeugen.

Der Erfindung liegt daher die Aufgabe zugrunde, ein Verfahren zum Herstellen von Flachflaschen und eine Vorrichtung zu seiner Durchführung zu schaffen, die es gestatten, Flachflaschen in allen derzeit üblichen Ausführungsformen mit zumindest über den grössten Teil ihrer Höhe, nämlich vom Boden bis zur Schulter nahezu gleichförmigen Wandstärke materialsparend und mit kurzen Taktzeiten zu erzeugen. Ausgehend von der US-A-3 892 829 wird die gestellte Aufgabe mit dem im Patentanspruch 1 angegebenen Verfahren gelöst. Die Lösung beruht nicht zuletzt auf der im Gegensatz zu den bisherigen Vorstellungen stehenden Erkenntnis, dass der an sich bekannte Zwischenformling im Bereich seines Übergangs in den Boden einen grösseren Umfang als die fertige Flachflasche im gleichen Bereich haben muss, um in den Ecken der Flachflasche, also dort, wo sich jeweils eine Breitseite, eine Schmalseite und der Boden treffen, die geforderte Wandstärke zu erzielen. Der Umfang des Körpers des Zwischenformlings geht also von einem normalerweise geringfügigen Untermass im Verhältnis zu dem entsprechenden Umfang der Flachflasche kontinuierlich in Richtung des Bodens auf ein im Regelfall geringes Übermass (< 10%) über, wobei das Übermass sich im Einzelfall danach richtet, wie gut einerseits die im Kennzeichen des Anspruches 1 genannten Krümmungsradien aneinander angenähert sind, andererseits danach, wie lang die Quetschkante des während des Umformens zur Flachflasche abgequetschten Bodenteils ist.

Durch die im Anspruch 2 genannte Weiterbildung des Verfahrens lässt sich die Ausbildung des Bodens der Flachflasche optimieren.

Vorrichtungsmässig ist die der Erfindung zugrundeliegende Aufgabe durch die im Anspruch 5 angegebenen Merkmale gelöst. Hierbei wird von einer Extrusionsblasmaschine nach der US-PS 3 892 829 ausgegangen, jedoch in der Ausführungsform, die mit einem freiextrudierten Schlauch arbeitet. Erst mit einer Endblasform der an sich aus der DE-PS 27 20 448 im wesentlichen bekannten Art lässt sich jedoch das hier vorgeschlagene Verfahren durchführen.

Das Verfahren nach der Erfindung wird nachfolgend beispielhaft anhand der Zeichnung erläutert. Es zeigen:

Fig. 1 einen Längsschnitt durch die Zwischenblasform,

Fig. 2 einen Querschnitt durch die Zwischenblasform längs der Linie II-II in Fig. 1,

Fig. 3 einen Längsschnitt durch die geöffnete Endblasform,

Fig. 4 einen Querschnitt durch die geöffnete Endblasform längs der Linie IV-IV in Fig. 3,

Fig. 5 einen Längsschnitt durch die teilweise geschlossene Endblasform und

Fig. 6 einen Querschnitt durch die teilweise geschlossene Endblasform längs der Linie VI-VI in Fig. 5,

Fig. 7 einen Schnitt der Flachflasche längs ihrer kurzen Querachse, und

Fig. 8 einen Schnitt der Flachflasche längs ihrer langen Querachse.

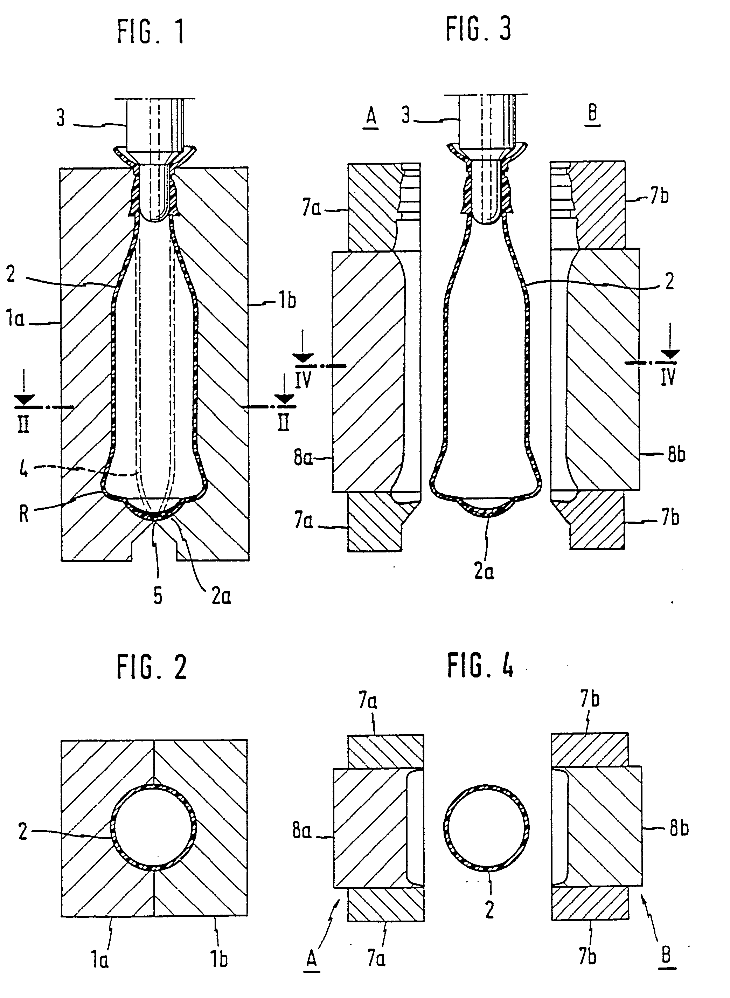

Die Figuren 1 und 2 zeigen im Längs- und im Querschnitt eine aus zwei rechtwinklig zu ihrer Trennebene verfahrebaren Formhälften 1a und 1b bestehende Zwischenform, in deren Formhohlraum ein Zwischenformling 2 mittels einer Blaspinole 3 aus einem gestrichelt gezeichneten, extrudierten Kunststoffschlauch 4 geblasen wurde. Der Kunststoffschlauch 4 wurde zuvor kontinuierlich oder mittels einer Schubschnecke frei extrudiert, an seinem unteren Ende verschlossen und zu seiner Stabilisierung vorzugsweise noch während des Extrudierens leicht zwischengeblasen, so dass er in Wirklichkeit eine im Längsschnitt schwach ovale Gestalt hat, bevor er von der Zwischenform 1a, 1b übernommen und zu dem dargestellten Zwischenformling 2 geblasen wurde.

Die Zwischenform 1a, 1b hat oberhalb ihrer Schneidkante 5 eine kugelkalottenförmige Einsenkung im Formboden, die zur Aufnahme der an der Abquetschkante des Kunststoffschlauches 4 zwangsläufig entstehenden Materialanhäufung dient. Stattdessen kann die Einsenkung auch becherförmige Gestalt haben, wenn die abgequetschte Materialanhäufung ein grösseres Volumen haben sollte. Hieran schliesst sich nach aussen ein nur ganz schwach konvexer Bodenbereich an. Im übrigen begrenzen die Zwischenformhälften 1a und 1b einen Formhohlraum, der einen Zwischenformling 2 entstehen lässt, dessen Mündung und dessen Halsbereich schon vollständig oder nahezu vollständig mit den entsprechenden Teilen der späteren Flachflasche übereinstimmen, während der Umfang des Zwischenformlings (bzw. des Formhohlraumes) im Schulter- und Körperbereich bis zu etwa 10% kleiner, hingegen im bodennahen Bereich bis etwa 15% grösser als der entsprechende Umfang des Flachflasche bemessen ist. Die Durchmesseränderungen erfolgen — wie dargestellt — kontinuierlich. Sofern im Schulterbereich der herzustellenden Flachflasche ausgeprägte Kanten vorhanden sind, muss der Zwischenformling auch hier einen um einige Prozent grösseren Umfang haben als die fertige Flasche in derselben Höhe aufweist. Grundsätzlich gilt, dass das für den Zwischenformling vorzusehende Umfangsübermass umso grösser ist, je ausgeprägtere Kanten und Ecken die fertige Flasche hat. Nur dann werden Wandstärkenverringerungen und ggf. sogar das Aussehen beeinträchtigende Überreckungen dieser kritischen Bereiche vermieden.

Des weiteren ist der Krümmungsradius R des Übergangs von der Körperwand zu dem Boden des Zwischenformlings etwa gleich dem Krümmungsradius des gleichen Übergangs der herzustellenden Flachflasche.

Die Länge des Zwischenformlings (bzw. des Formhohlraums der Zwischenform) ist nahezu gleich der Höhe der herzustellenden Flachflasche, mit der Massgabe, dass das kugelkalottenförmige Mittelstück 2a bei der Festlegung der Länge nicht mitgerechnet wird, da es wegen der darin enthaltenen Materialanhäufung in der Endblasform abgequetscht wird, wodurch sowohl Material als auch Kühlzeit eingespart wird.

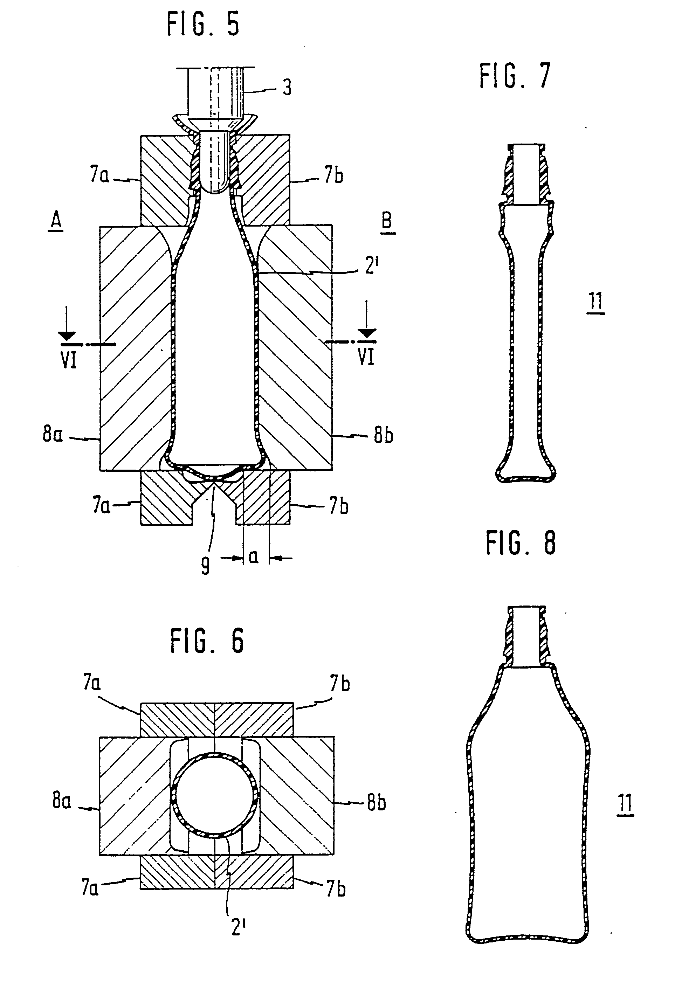

Diese Auslegung der Zwischenform 1a, 1b bzw. des Zwischenformlings 2 erlaubt es, diesen nachfolgend in einer Endblasform zu der fertigen Flachflasche umzuformen, ohne dass hierbei noch irgendwelche nennenswerten Materialverstreckungen und damit Wandstärkenänderungen eintreten. Dieser Umformungsvorgang ist in den Figuren 3 und 4 in der Ausgangsstellung und in den Figuren 5 und 6 in einer Zwischenstellung dargestellt. Voraussetzung für diese Umformung ist die Verwendung einer insgesamt vierteiligen Endblasform. Diese besteht aus zwei senkrecht zur Formtrennebene verfahrbaren Formhälften A und B, von denen jede wiederum aus zwei Formteilen 7a, 7b und 8a, 8b besteht. Die Formteile 7a, 7b sind unabhängig von den Formteilen 8a, 8b zusammenfahrbar. Die Formteile 8a, 8b sind in den Formteilen 7a, 7b verschiebbar geführt, so dass die letzteren einen äusseren Rahmen bilden, wobei die Trennebene vorzugsweise im Bereich der engen Radien der späteren Flachflasche liegen.

In den Figuren 3 und 4 ist die Übernahmestellung dargestellt, in der der Zwischenformling der Figuren 1 und 2 sich, noch an der Blaspinole 3 hängend, zwischen den geöffneten Formhälften A und B der Endblasform befindet.

In den Figuren 5 und 6 ist der Zustand nach dem Schliessen der rahmenartigen Formteile 7a, 7b und dem teilweisen Schliessen der Formteile 8a, 8b dargestellt. In diesem Zustand hat die in der Bodentrennebene der rahmenartigen Formteile 7a, 7b vorgesehene Schneidkante 9 das kalottenförmige, verdickte Mittelstück des Zwischenformlings 2' bereits abgetrennt. Der Durchmesser dieses verdickten Mittelstücks 2a (bzw. der dieses ausbildenden, kugelkalottenförmigen Einsenkung im Formboden der Zwischenform) ist so bemessen, dass er etwa die Hälfte der langen Achse des Flachflaschenbodens beträgt. Die inneren Formteile 8a, 8b, die die späteren Breitseiten der Flachflasche ausbilden, kommen in der gezeichneten Stellung gerade in Kontakt mit dem Zwischenformling 2', der durch Absperren des Blasluftkanals 3a der Blaspinole 3 mittels eines nicht dargestellten Ventils unter einem ausreichenden Innendruck gehalten wird. Aus diesem Grund fängt der Zwischenformling 2' in seinem Bodenbereich bereits an, sich an die Kontur der rahmenartigen Formteile 7a, 7b anzulegen. Trotz vergleichbaren Aussehens handelt es sich also bei diesem «Vorboden» nicht mehr um das verdickte kalottenförmigen Mittelstück 2a des Bodens des ursprünglichen Zwischenformlings 2. Nachfolgend schliessen sich die inneren Formteile 8a, 8b um die restliche, mit «a» bezeichnete Verschiebungsstrecke. Damit nimmt der Zwischenformling 2' nahezu schon die Kontur der fertigen Flachflasche aa 1n, die in einem Schnitt längs ihrer kurzen Querachse in Figur 7 und in einem Schnitt längs ihrer langen Querachse in Figur 8 dargestellt ist.

Hierzu wird die Endblasform unter eine Endblaspinole verfahren und mit dem vollen Endblasdruck beaufschlagt. Die Endblaspinole hat die gleiche Gestalt wie die Blaspinole 3 und ist daher nicht dargestellt. Nach der Abkühlzeit wird die Endblasform geöffnet und die Flachflasche 11 ausgeworfen.

Bei dem vorstehend beschriebenen Verfahren übernimmt also die Endblasform den Zwischenformling in der Zwischenblasstation nach dem Öffnen und Wegfahren der Zwischenblasform 1a, 1b von der Blaspinole 3, schliesst sich zumindest teilweise, vorzugsweise aber vollständig und fährt in die Endblasstation unter die Endblaspinole.

Eine Abwandlung dieses Verfahrens vermeidet eine zu starke Abkühlung des Zwischenformlings in dieser Phase, d. h. von der Übernahme in die Endblasform unter der Blaspinole 3 bis zur Druckbeaufschlagung durch die Endblaspinole. Diese bei temperaturempfindlichen Kunststoffen empfehlenswerte Abwandlung besteht darin, die Endblasform 7a, 7b, 8a, 8b in der Übernahmestellung unter der Blaspinole 3 auf jeden Fall vollständig zu schliessen und den Zwischenformling 2 mittels der Blaspinole 3 zumindest kurzzeitig mit dem vollen Endblasdruck zu beaufschlagen, so dass er sich bereits in dieser Zwischenblasstation vollständig zu der Flachflasche 11 umformt. Auf diese Weise werden Oberflächenunregelmässigkeiten wegen vorzeitiger Abkühlung vermieden. Die Endblasform wird anschliessend in die Endblasstation unter die Endblaspinole überführt, die die Flachflasche 11 während der restlichen Abkühlzeit nochmals mit Druckluft beaufschlagt. Bei diesem gewissermassen zweischrittigen Endblasen sollte der erste Schritt (mittels der Blaspinole 3) so kurz als möglich sein, um eine Verlängerung der Taktzeit infolge des Verweilens der Endblasform in der Zwischenblasstation zu vermeiden.

## Patentansprüche

1. Verfahren zur Herstellung von Flachflaschen mit planem oder konkavem Boden durch freies Extrudieren eines Kunststoffschlauches, Blasen eines Zwischenformlings mit Kreisquerschnitt und mechanisches Umformen sowie gleichzeitiges Fertigblasen des letzteren zu der Flachflasche, *dadurch gekennzeichnet*, dass der Zwischenformling

— mit einer Länge etwa gleich der Höhe der Flachflasche,

— mit einem Umfang im Körperbereich von −1 bis etwa −10%, im bodennahen Bereich der Seitenwände jedoch von 0 bis etwa +15%, jeweils bezogen auf den entsprechenden Umfang der Flachflasche, und

— mit einem Krümmungsradius des Übergangs von der Körperwand zu dem Boden etwa gleich dem Krümmungsradius des Übergangs der Körperwand der Breitseite der Flachflasche zu deren Boden

geblasen wird, und dass das dem gequetschten Ende des Schlauches entsprechende Bodenteil während des Umformens zur Flachflasche abgequetscht wird.

2. Verfahren nach Anspruch 1, dadurch gekennzeichnet, dass der Boden des Zwischenformlings mit einem grossen, schwach konvexen Krümmungsradius im Randbereich und einem kugelkalottenartigen Mittelstück ausgebildet wird, dessen Durchmesser etwa gleich der Hälfte der langen Achse des Bodens der Flachflasche ist.

3. Verfahren nach Anspruch 1 oder 2, dadurch gekennzeichnet, dass der Zwischenformling im Schulterbereich mit einem Umfang von bis zu +10% des Umfangs der Flachflasche an der entsprechenden Stelle geblasen wird.

4. Verfahren nach Anspruch 1 bis 3, dadurch gekennzeichnet, dass der Zwischenformling in zwei Schritten zu der Flachflasche geblasen und umgeformt wird, von denen der erste mit der gleichen Blaspinole durchgeführt wird, die diesen Zwischenformling erzeugt hat.

5. Extrusionsblasmaschine mit einer Schlauchextrusionsdüse, einer geteilten Zwischenform mit zugeordneter Blaspinole, einer zwei Formhälften umfassenden Endblasform mit zugeordneter Blaspinole, sowie mit Nebenvorrichtungen für das Schlauchtrennen und -abquetschen, das Übergeben und das Auswerfen, zur Durchführung des Verfahrens nach einem der Ansprüche 1 bis 4, dadurch gekennzeichnet, dass jede Formhälfte der Endblasform aus zwei senkrecht zur Formtrennebene verfahrbaren Formteilen (7a, 7b, 8a, 8b) besteht, von denen das erste (7a, 7b) den Hals, die Schmalseite und den Boden der Flachflasche (11) das zweite (8a, 8b) die Breitseiten der Flachflasche (11) erzeugt, wobei der freie Rand der Bodenpartie des ersten Formteils als Abquetschkante (9) ausgebildet ist.

## Revendications

1. Procédé de fabrication de bouteilles plates à fond plan ou concave par extrusion libre d'une gaine de matière plastique, formation par soufflage d'une ébauche intermédiaire de section circulaire et transformation mécanique avec soufflage de finition simultané de cette dernière pour l'obtention de la bouteille plate, caractérisé en ce que l'ébauche intermédiaire est formée par soufflage
— avec une longueur à peu près égale à la hauteur de la bouteille plate,
— avec une circonférence de −1 à environ −10% dans la région du corps, mais de 0 à environ +15% dans la région des parois latérales proches du fond, par rapport à la circonférence correspondante de la bouteille plate, et
— avec un rayon de courbure de la région de transition entre la paroi du corps et le fond à peu près égal au rayon de courbure de la région de transition entre la paroi du corps sur les grands côtés de la bouteille plate et le fond de celle-ci, et en ce que la partie du fond correspondant à l'extrémité pincée de la gaine est écrasée pendant la transformation en bouteille plate.

2. Procédé selon la revendication 1, caractérisé en ce que le fond de l'ébauche intermédiaire est formé avec un grand rayon de courbure faiblement convexe dans la région du bord et avec une partie centrale en forme de calotte sphérique dont le diamètre est à peu près égal à la moitié du grand axe du fond de la bouteille plate.

3. Procédé selon la revendication 1 ou 2, caractérisé en ce que l'ébauche intermédiaire est formée par soufflage avec, dans la région de l'épaule, une circonférence allant jusqu'à +10% par rapport au périmètre de la bouteille plate à l'endroit correspondant.

4. Procédé selon l'une quelconque des revendications 1 à 3, caractérisé en ce que l'ébauche intermédiaire est soufflée et transformée en bouteille plate en deux étapes, parmi lesquelles la première est conduite avec le même fourreau de soufflage qui a produit cette ébauche intermédiaire.

5. Machine d'extrusion-soufflage pour l'exécution du procédé selon l'une quelconque des revendications 1 à 4, comportant une filière d'extrusion pour gaine, un moule intermédiaire divisé auquel est adjoint un fourreau de soufflage, ainsi que des dispositifs auxiliaires pour le sectionnement et l'écrasement de la gaine, le transfert et l'éjection, caractérisée en ce que chaque moitié du moule de soufflage final se compose de deux parties de moule (7a, 7b, 8a, 8b) mobiles perpendiculairement au plan de séparation du moule, parties dont la première (7a, 7b) produit le goulot, les petits côtés et le fond de la bouteille plate (11) et dont la seconde (8a, 8b) produit les grands côtés de la bouteille plate (11), le bord libre de la partie du fond de la première partie du moule étant réalisé sous forme d'arête d'écrasement (9).

## Claims

1. A method of producing flat bottles with a flat or concave bottom by free extrusion of a synthetic plastics tube, blowing of an intermediate blank of circular cross-section and mechanical reshaping with a simultaneous finish blowing of the latter to produce the flat bottle, characterised in that the intermediate blank is blown
— with a length substantially equal to the height of the flat bottle,
— with a periphery in the body region of −1 to about −10%, in the part of the side walls close to the bottom of 0 to about +15%, in each case in relation to the corresponding periphery of the flat bottle, and
— with a radius of curvature of transition from the body wall to the bottom which is substantially equal to the radius of curvature of the transition between the body wall of the broad side of the flat bottle to the bottom thereof,
and in that the bottom part corresponding to the squashed end of the tube is squashed while it is being reshaped into the flat bottle.

2. A method according to Claim 1, characterised in that the bottom of the intermediate blank is constructed with a large slightly convex radius of curvature in the marginal portion and with a ball and cup-like middle portion, the diameter of which is substantially equal to half the long axis of the bottom of the flat bottle.

3. A method according to Claim 1 or 2, characterised in that in the shoulder portion, the intermediate blank is blown with a periphery of up to +10% of the periphery of the flat bottle at the corresponding location.

4. A method according to Claims 1 to 3, characterised in that the intermediate blank is blown and reshaped in two stages to produce the flat bottle, the first stage being carried out with the same blowing jet which produced the intermediate blank.

5. Extrusion blowing machine with a tube extrusion nozzle, a divided intermediate mould with an associated blowing nozzle, a final blowing mould comprising two mould halves, and with an associated blowing nozzle, as well as with subsidiary devices for cutting and squashing tubes, for transferring and ejecting, and for carrying out the method according to one of Claims 1 to 4, characterised in that each mould half of the final blowing mould consists of, mobile at right angles to the plane of mould separation, two mould parts (7a, 7b, 8a, 8b) the first of which (7a, 7b) produces the neck, the narrow side and the bottom of the flat bottle (11), while the second (8a, 8b) produces the broad sides of the flat bottle (11), the free edge of the bottom part of the first mould part being constructed as a squashing edge (9).

# FIG. 1

# FIG. 3

# FIG. 2

# FIG. 4

EP 0 256 062 B1

FIG. 5

FIG. 7

FIG. 6

FIG. 8

9